(19)

Europäisches
Patentamt
European
Patent Office
Office européen
des brevets

(11)     **EP 2 371 517 B1**

(12)                   **EUROPEAN PATENT SPECIFICATION**

(45) Date of publication and mention
of the grant of the patent:
**25.07.2012   Bulletin 2012/30**

(51) Int Cl.:
**B29C 47/48** (2006.01)          **B29C 47/88** (2006.01)
**C08K 5/00** (2006.01)           **B29C 45/00** (2006.01)
**B29C 47/00** (2006.01)

(21) Application number: **10158393.8**

(22) Date of filing: **30.03.2010**

(54) **Process for transforming polypropylene into a crystal modification of high transparency and articles resulting from said process**

Verfahren zur Umformung von Polypropylen in eine Kristallmodifikation mit hoher Transparenz und aus diesem Verfahren resultierende Artikel

Procédé pour la transformation de polypropylène dans une modification de cristal hautement transparent et articles résultant dudit procédé

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**05.10.2011   Bulletin 2011/40**

(73) Proprietor: **Borealis AG**
**1220 Vienna (AT)**

(72) Inventors:
• **Obadal, Martin**
**4020, Linz (AT)**
• **Ruemer, Franz**
**4222, St. Georgen/Gusen (AT)**
• **Kaliappan, Senthil Kumar**
**4020, Linz (AT)**
• **Sandholzer, Martina**
**4020, Linz (AT)**

(74) Representative: **Lux, Berthold et al**
**Maiwald Patentanwalts GmbH**
**Elisenhof**
**Elisenstraße 3**
**80335 München (DE)**

(56) References cited:
EP-A1- 0 329 810          EP-A1- 0 969 036
EP-A2- 0 343 647          EP-A2- 0 650 818
WO-A1-2008/024154         WO-A1-2008/088995
JP-A- 63 097 648          US-A- 4 302 504
US-A1- 2010 040 813       US-B1- 6 410 662

**Description**

The present invention relates to a process for producing polypropylene articles comprising a high relative content of the orthorhombic gamma-crystal modification by applying four consecutive process steps, namely (a) heating a polypropylene composition comprising a propylene random copolymer and an alpha-crystal nucleating agent to form a melt, (b) shearing said melt at a high apparent shear rate, (c) shaping said melt into an article, and (d) cooling said melt in a specific range of cooling rate to obtain polypropylene articles of high transparency. The invention also relates to polypropylene articles of high transparency and low haze being characterized by a high relative content of the orthorhombic gamma-crystal modification, and to the use of such articles for packaging. Such articles are resulting from a four-step melting and shaping process as defined before.

When using articles like cups, cans, jars, pails or bottles, all being characterized by a low average wall thickness, for packaging any kind of material which should be clearly visible and recognizable for the applicant and/or consumer through the wall of said article, high transparency is an important precondition. These articles must, however, also exhibit a certain stiffness expressed by the modulus, the compression strength or also the stacking height in order to ensure transportability and safety. Furthermore, said articles must possess high thermomechanical stability, as expressed by the melting point and the heat deflection temperature. If propylene polymers are used for producing such articles it is difficult to strike a compromise between transparency on the one hand, and stiffness and heat resistance on the other hand, as the crystallinity of the polymer will normally affect stiffness positively but transparency negatively.

Document WO 2008/088 995 A1 discloses a random polypropylene copolymer composition that can comprise a nucleator in order to provide injection molded articles with reduced crystallinity. Another propylene copolymer composition having a very excellent transparency is disclosed in JP 63097648 A.

It was therefore the target of the present invention to find a process for producing polypropylene articles having high transparency combined with high stiffness and heat resistance. As polypropylenes having a high relative content of the orthorhombic gamma-crystal modification of isotactic polypropylene were found to advantageously combine said target properties, a process was sought which is able to produce articles comprising such polypropylenes with high speed and process safety.

It is well known that different types of crystal nucleating agents will affect the crystal structure of the polymer differently, enhancing the presence and relative amounts of specific crystal modifications of isotactic polypropylene, like the monoclinic α-modification, the pseudo-hexagonal β-modification and the orthorhombic γ-modification. While the polymer structure will affect the degree of expression of a specific nucleation, the type of crystal formed will be determined by the nucleating agent.

Such nucleating agents for isotactic polypropylene can also be separated into two classes with physically distinct behaviour:

-    particulate nucleating agents with a conventional dispersion mechanism, for which particle size and polarity difference to polymer are decisive. Examples for this class include inorganic nucleating agents like talc, but also organic nucleating agents like sodium benzoate, organophosphates and salts of p(tert-butyl benzoic acid), as well as polymeric nucleating agents like poly(tetrafluoroethylene)

-    soluble nucleating agents with a sequence of dissolution upon heating and recrystallization upon cooling defining the degree of dispersion. In the latter case, solubility and the resulting crystal shape are decisive for the efficiency. Examples include sorbitol derivatives, nonitol derivatives and benzene-trisamides.

In the prior art several attempts to generate moulded articles having a high relative content of the orthorhombic gamma-crystal modification of isotactic polypropylene are described, which are however either only suitable for polymers with very poor mechanical performance, or which involve operations of high technological complexity resulting in high processing cost. For example Libster et al. (Journal of Colloid and Interface Science, vol. 299 (2006) pages 172-181) present a special microemulsion technique for dispersing a specific nucleating agent, namely a disodium salt of bicyclo [2.2.1]heptane dicarboxylate (trade name Hyperform HPN-68, commercially available from Milliken Inc., USA) to achieve a $K_\gamma$-value of 0.66 in an isotactic polypropylene copolymer having an ethylene content of about 3 wt%, in comparison to a $K_\gamma$-value of 0.42 as achieved by a standard process, relating to a relative content of the orthorhombic gamma-crystal modification of 66% versus 42%. Such a process will not be suitable for industrial practice. On the other hand, Piccarolo et al. (Polymer, vol.42 (2001) pages 1167-1176) demonstrate the necessity of either high pressures or low cooling rates for even achieving limited relative content of the orthorhombic gamma-crystal modification like 27% at a cooling rate of less than $0.1 \, \mathrm{K.s^{-1}}$ for an isotactic polypropylene copolymer having an ethylene content of 3.1 wt% nucleated with dibenzylidene sorbitol (trade name Millad 3905, commercially available from Milliken Inc., USA). Again, such low cooling rates will not be suitable for industrial practice.

It has now surprisingly been found that a specific melting and shaping process involving a propylene random copolymer and an alpha-crystal nucleating agent is suitable for producing moulded polypropylene components being characterized by an average relative content of the orthorhombic gamma-crystal modification of more than 50%. More specifically, said melting and shaping process involves four consecutive process steps, namely:

(a) heating a polypropylene composition comprising a propylene random copolymer and an alpha-crystal nucleating agent to form a melt,

(b) shearing said melt at a high apparent shear rate of at least 100 $s^{-1}$,

(c) shaping said melt into an article, and

(d) cooling said melt and the resulting article at a cooling rate of 10 to 10000 $K.min^{-1}$

to obtain polypropylene articles of high transparency.

The polypropylene composition comprises an isotactic propylene random copolymer preferably comprising from 80.0 to 99.0 wt%, more preferably from 85.0 to 98.0 wt%, even more preferably from 88.0 to 97.5 wt%, of propylene and preferably from 1.0 to 20.0 wt%, more preferably from 2.0 to 15.0 wt%, even more preferably from 2.5 to 12.0 wt% of ethylene and/or $\alpha$-olefin(s) with 4 to 12 carbon atoms. More preferably, said isotactic propylene random copolymer comprises only propylene, and ethylene and/or 1-butene as comonomers. Particularly preferred are isotactic propylene random copolymers having only ethylene as comonomer. Especially preferred ethylene content for copolymers having only ethylene as comonomer is from 1 to 10, particularly preferred from 1 to 8, more particularly preferred from 2 to 6 wt%.

For being applicable in the target application areas of injection moulding, extrusion blow moulding and injection stretch blow moulding, these polypropylene random copolymers shall have a melt flow rate as determined according to ISO 1133 at 230°C and 2.16 kg load ($MFR_2$) from 0.5 to 200 g/10min, preferably from 1.0 to 150 g/10min, most preferably from 2.0 to 100 g/10min. This corresponds to a weight average molecular weight Mw as calculated from the molecular weight distribution determined by size exclusion chromatography according to ISO 16014 from 80,000 to 950,000 g/mol, preferably from 100,000 to 850,000 g/mol, most preferably from 120,000 to 750,000 g/mol.

In order to achieve the desired combination of mechanical and optical properties it is further preferred that the polypropylene random copolymers shall have a narrow to medium broad molecular weight distribution. More specifically it is desired that the ratio of weight and number average molecular weight, Mw/Mn, as calculated from the molecular weight distribution determined by size exclusion chromatography according to ISO 16014 ranges from 2.2 to 6.0, preferably from 2.5 to 5.0.

Suitable production processes for the mentioned polypropylene random copolymers are generally known to those skilled in the art. For the production of these isotactic polypropylene copolymers single- or multi-stage polymerization processes based on a heterogeneous Ti/Mg type catalyst (Ziegler/Natta type) or a heterogeneous or homogeneous metallocene (single-site) type catalyst can be employed. The catalyst system will normally be complemented by a co-catalyst component and at least one electron donor (internal and/or external electron donor, preferably at least one external donor) controlling the stereoregularity of the produced polymer. Suitable catalysts are in particular disclosed in US 5,234,879, WO 92/19653, WO 92/19658 and WO 99/33843, incorporated herein by reference. Typically the co-catalyst is an Al-alkyl based compound. Preferred external donors are the known silane-based donors, such as dicyclopentyl dimethoxy silane or cyclohexyl methyldimethoxy silane.

Preferably, a multi-stage process is applied in which both the molecular weight and the comonomer content can be regulated independently in the different polymerisation stages. Such processes are for example described in more detail in EP 887379 A1, EP 1032599 A1 and EP 1155048 A1.

For achieving the desired combination of molecular weight distribution and random incorporation of comonomers, polymerization procedures as described in EP 2042552 A1 and EP 2030996 A1 are especially suitable.

Furthermore, the alpha-crystal nucleating agent is preferably mixed with the propylene random copolymer in a weight ratio ranging from 0.0001:99.9999 to 1:99. Thus, the polypropylene composition comprises from 0.0001 to 1.0, preferably from 0.0005 to 0.8 wt% of said alpha-crystal nucleating agent.

According to an advantageous embodiment, the nucleating agent is an organic alpha-crystal nucleating agent.

According to a further embodiment, the alpha-crystal nucleating agent is a particulate nucleating agent. More preferably it is selected from the group consisting of non-substituted or substituted benzoate salts, aromatic organophosphates, non-bridged or bridged salts of o-hexahydrophtalic acid, poly(vinyl cyclohexane), poly(4-methyl pentene-1) and poly(tetrafluoro ethylene). Most preferably, said alpha-crystal nucleating agent is selected from the group consisting of sodium 2,2'-methylene-bis-(4,6-di-tert-butylphenyl) phosphate (CAS No. 85209-91-2, tradename Adekastab NA-11, commercially available from Adeka Palmarole, France), a mixture consisting of 60 wt% Hydroxybis (2,4,8,10-tetra-tert. butyl-6-hydroxy-12H-dibenzo(d,g)(1,3,2) dioxaphosphocin 6-oxidato) aluminium (CAS No. 151841-65-5) and 40 wt% Li-myristate (CAS No. 20336-96-3) (tradename Adekastab NA-21, commercially available from Adeka Palmarole, France), the disodium salt of Cis-endo-bicyclo[2.2.1]heptane-2,3-dicarboxylic acid (CAS No. 351870-33- 2; tradename Hyperform HPN-68, commercially available from Milliken Inc., USA) and poly(vinyl cyclohexane) (CAS No. 25498-06-0).

The four steps of said process for producing articles comprising predominantly comprising a high relative content of the orthorhombic gamma-crystal modification can be carried out in one or two connected sequences.

According to one embodiment, the steps (a), (b), (c) and (d) as defined before are carried out in one connected sequence and one processing setup. According to this embodiment, the step (a) of heating a polypropylene composition comprising an isotactic propylene random copolymer and at least one alpha-crystal nucleating agent to a temperature of from 200 to 350 °C to form a melt is carried out in the single-screw extruder belonging to an injection moulding machine, an extrusion blow moulding machine or an injection stretch blow moulding machine. The step (b) of shearing said melt at an apparent shear rate of at least 100 s$^{-1}$, the step (c) of shaping said melt into an article and the step (d) of cooling said melt and said article at a cooling rate of from 10 to 10000 K.min$^{-1}$ are carried out in the die and tool section of said processing setup. Preferably, the heating step (a) is performed in a temperature interval from 220 to 320°C.

According to another embodiment, the steps (a), (b), (c) and (d) as defined before are carried out in two connected sequences and two different processing setups. According to this embodiment, the step (a) of heating a polypropylene composition comprising an isotactic propylene random copolymer and at least one alpha-crystal nucleating agent to a temperature of from 200 to 350 °C to form a melt is carried out in a conventional melt mixing device like a specially equipped single screw extruder, a reciprocating co-kneader or a co-rotating twin-screw extruder. Preferably, the heating step (a) is performed in a temperature interval from 220 to 320°C. The resulting melt is then cooled and solidified in the shape of granules to be re-heated before performing the further process steps. The step (b) of shearing said melt at an apparent shear rate of at least 100 s$^{-1}$ can be carried out either in said melt mixing device or in the following processing setup. The step (c) of shaping said melt into an article and the step (d) of cooling said melt and said article at a cooling rate of from 10 to 10000 K.min$^{-1}$ are carried out in the die and tool section of an injection moulding machine, an extrusion blow moulding machine or an injection stretch blow moulding machine.

A shear rate of $\geq$ 100 s$^{-1}$ is used in step b) of the present invention. More preferred, the shear rate is $\geq$ 150 s$^{-1}$, still more preferred $\geq$ 200 s$^{-1}$, even more preferred $\geq$ 300 s$^{-1}$. A practical upper limit is about 5000 s$^{-1}$, preferably 3000 s$^{-1}$, more preferably 2000 s$^{-1}$.

A cooling rate of 10 to 10000 K.min$^{-1}$ is used in step d) of the present invention. More preferred, the cooling rate is $\geq$ 100 K.min$^{-1}$, still more preferred $\geq$ 500 K.min$^{-1}$, even more preferred $\geq$ 1000 K.min$^{-1}$. A more preferred upper limit is 8000 K.min$^{-1}$, still more preferred 6000 K.min$^{-1}$.

It was a further target of this invention to obtain polypropylene articles of high transparency and low haze being characterized by a high relative content of the orthorhombic gamma-crystal modification. Said articles article comprise a propylene random copolymer and an alpha-crystal nucleating agent and are characterized by an average relative content of the orthorhombic gamma-crystal modification of more than 50%, preferably of more than 55%, as determined by wide-angle X-ray scattering (WAXS). An upper limit of the average relative content of the orthorhombic gamma-crystal modification is 95%, more preferably 90%, most preferable 85%.

Preferably, said articles comprise a polypropylene composition comprising a propylene random copolymer and an alpha-crystal nucleating in a weight ratio ranging from 0.0001:99.9999 to 1:99. More preferably, said articles comprise at least 75 wt% of said polypropylene composition. Most preferably, said polypropylene composition is the only polymeric component present in said articles.

Such polypropylene articles are typically resulting from a four-step melting and shaping process involving steps (a), (b), (c) and (d) as defined herein before.

According to one preferred embodiment, such polypropylene articles are moulded articles obtained by injection moulding or extrusion blow moulding or injection stretch blow moulding, having an average wall thickness of at most 2.0 mm and a haze at 2.0 mm thickness not more than 45%.

According to another preferred embodiment, such polypropylene articles are moulded articles obtained by injection moulding or extrusion blow moulding or injection stretch blow moulding, having an average wall thickness of at most 1.0 mm and a haze at 1.0 mm thickness of not more than 30%.

Typical shapes of such polypropylene articles are cups, cans, pails, jars and bottles. A preferred use of such polypropylene articles is the area of packaging solid or liquid substances, like foodstuff or non-food materials. Especially preferred is the use of such polypropylene articles for packaging foodstuff like dairy products, ice-cream, pudding, soft drinks, ketchup, mayonnaise, mustard and the like. Also preferred is the use of such polypropylene articles for packaging chemical compositions like detergents, adhesives, paints, polishes and the like.

In the following the present invention is further illustrated by means of non-limiting examples.

**Examples**

Definition of the test methods:

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

b) Charpy notched impact test

Charpy impact strength was determined according to ISO 179-1eA:2000 on V-notched samples of 80x10x4 $mm^3$ at +23 °C. The test specimens were prepared by injection moulding in line with ISO 1873-2.

c) Flexural test

Flexural tests are performed according to ISO 178:2001 at +23 °C on injection moulded samples of 80x10x4 $mm^3$ prepared by injection moulding in line with ISO 1873-2. The flexural modulus (E-modulus) was calculated from the linear part of said flexural test results.

d) Haze

Haze is determined on injection moulded plaque samples of 60x60x2 $mm^3$ according to ASTM D 1003-00. The samples have been prepared by injection moulding using a melt temperature of 220°C and an injection speed of 0.8 $m.s^{-1}$, corresponding to an apparent wall shear rate of 400 $s^{-1}$ in the tool, and a tool temperature of 60 °C, resulting in an average cooling rate of 3600 $K.min^{-1}$ at a cycle time of 1.2 s.

e) NMR-spectroscopy measurements:

The comonomer content was determined by quantitative nuclear magnetic resonance (13C-NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g. "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

f) Molecular weight distribution

Number average molecular weight (Mn), weight average molecular weight (Mw) and molecular weight distribution (MWD) are determined by size exclusion chromatography (SEC) using Waters Alliance GPCV 2000 instrument with online viscometer. The oven temperature is 140 °C. Trichlorobenzene is used as a solvent (ISO 16014).

g) Differential Scanning Calorimetry (DSC)

DSC is run according to ISO 3146 / part 3 /method C2 in a heat / cool / heat cycle with a scan rate of 10 °C/min in the temperature range of +23 to +210°C. Crystallization temperature and enthalpy are determined from the cooling step, while melting temperature and melting enthalpy are determined from the second heating step.

h) Wide-angle X-ray Scattering (WAXS)

Samples prepared for WAXS were prepared in the same way as for the haze measurement.
The determination of crystallinity and of polymorphic composition was performed in reflection geometry using a Bruker D8 Discover with GADDS x-ray diffractometer operating with the following settings: x-ray generator: 30 kV and 20 mA; $\theta_1 = 6°$ & $\theta_2 = 13°$; sample-detector distance: 20 cm; beam size (collimator): 500 $\mu$m; and duration/scan: 300 seconds. 3 measurements have been performed on each sample. Intensity vs. $2\theta$ curves between $2\theta = 10°$ and $2\theta = 32.5°$ were obtained by integrating the 2-dimensional spectra. The quantification of intensity vs. $2\theta$ curves were then performed as follows:

Intensity vs. 2θ curve was acquired with the same measurement settings on an amorphous iPP sample, which was prepared by solvent extraction. An amorphous halo was obtained by smoothing the intensity vs. 2θ curve. The amorphous halo has been subtracted from each intensity vs. 2θ curve obtained on actual samples and this results in the crystalline curve.

The crystallinity index $X_c$ is defined with the area under the crystalline curve and the original curve using the method proposed by Challa et al. (Makromol. Chem. vol.56 (1962), pages 169-178) as:

$$X_c = \frac{\text{Area under crystalline curve}}{\text{Area under original spectrum}} \times 100 .$$

In a two-phase crystalline system (containing α- and β-modifications), the amount of β-modification within the crystalline phase B was calculated using the method proposed by Turner-Jones et al. (Makromol. Chem. Vol.75 (1964), pages 134-158) as:

$$B = \frac{I^\beta(300)}{I^\alpha(110) + I^\alpha(040) + I^\alpha(130) + I^\beta(300)},$$

where, $I^\beta(300)$ is the intensity of β(300) peak, $I^\alpha(110)$ is the intensity of α(110) peak, $I^\alpha(040)$ is the intensity of α(040) peak and $I^\alpha(130)$ is the intensity of α(130) peak obtained after subtracting the amorphous halo.

In a two-phase crystalline system (containing α- and γ-modifications), the amount of γ-modification within the crystalline phase G was calculated using the method developed by Pae (J. Polym. Sci., Part A2, vol. 6 (1968), pages 657-663) as:

$$G = \frac{I^\gamma(117)}{I^\alpha(130) + I^\gamma(117)},$$

where, $I^\alpha(130)$ is the intensity of α(130) peak and $I^\gamma(117)$ is the intensity of y(117) peak obtained after subtracting a base line joining the base of these peaks.

Polymers

**Table 1 - Polymers**

| Polymer | Mw | Mn | Mw/Mn | $C_2$ | Cluster index |
|---|---|---|---|---|---|
| | kg/mol | kg/mol | - | wt% | $^{13}$C-NMR |
| RA130E | 447 | 97 | 4,6 | 3,8 | 9,98 |
| RE906MO | 195 | 60 | 3,3 | 3,6 | 10,02 |
| RE909CF | n.d. | n.d. | n.d. | 5,7 | 9,96 |
| HE365FB | 223 | 47 | 4,7 | 0 | n.d. |

The polymers listed in table 1 are commercially available from Borealis AG.

**Examples**

The examples in the table below have been prepared as described in the description of the respective property measurement. The samples for WAXS measurement were prepared in the same way as those for haze measurement.

**Table 2 - Compositions**

| Number | Polymer | Nucleant | concentration | MFR$_2$ | Tc/DSC | Xc/WAXS | 100.K$\gamma$/WAXS | FlexMod | NIS | Haze |
|---|---|---|---|---|---|---|---|---|---|---|
| - | grade | type | ppm | g/10min | °C | % | % | MPa | kJ/m$^2$ | % |
| CE 1 | RA130E | none | 0 | 0,3 | 102 | 53 | 19 | 880 | 11,5 | 77 |
| Ex 1 | RA130E | NA-21 | 2000 | 0,3 | 118 | 56 | 56 | 1170 | 36 | 42 |
| Ex 2 | RA130E | NA-21 | 4000 | 0,3 | 121 | 56 | 57 | 1210 | 28 | 41 |
| CE 2 | RE906CF | none | 0 | 12 | 103 | 57 | 23 | 910 | 4,5 | 81 |
| Ex 3 | RE906CF | NA-21 | 500 | 12 | 117 | 59 | 66 | 1080 | 5,3 | 42 |
| Ex 4 | RE906CF | NA-21 | 2000 | 12 | 119 | 59 | 70 | 1160 | 3,9 | 31 |
| CE 3 | RE909CF | none | 0 | 12 | 96 | 51 | 39 | 560 | 10,2 | 76 |
| Ex 5 | RE909CF | NA-21 | 500 | 12 | 115 | 53 | 76 | 610 | 10,5 | 32 |
| Ex 6 | RE909CF | NA-21 | 2000 | 12 | 116 | 53 | 77 | 640 | 11,3 | 25 |
| CE 4 | HE365FB | none | 0 | 12 | 113 | 66 | 0 | 1580 | 2,0 | 82 |
| CE 5 | HE365FB | NA-21 | 1000 | 12 | 122 | 69 | 0 | 1770 | 1,9 | 67 |
| CE ... Comparative Example<br>Ex ... Example according to the invention | | | | | | | | | | |

**Claims**

1. A process for producing articles comprising a polypropylene composition, said process comprising the steps of

   a) heating said polypropylene composition comprising an isotactic propylene random copolymer and at least one alpha-crystal nucleating agent to a temperature of from 200 to 350 °C to form a melt,
   b) shearing said melt at an apparent shear rate of at least 100 s$^{-1}$
   c) shaping said melt into an article and
   d) cooling said melt/article at a cooling rate of from 10 to 10000 K.min$^{-1}$.

2. A process according to claim 1, wherein the isotactic propylene random copolymer comprises from 80.0 to 99.0 wt% of propylene and from 1.0 to 20.0 wt% of ethylene and/or $\alpha$-olefin(s) with 4 to 12 carbon atoms.

3. A process according to claims 1 or 2, wherein the alpha-crystal nucleating agent is mixed with the propylene random copolymer in a weight ratio ranging from 0.0001:99.9999 to 1:99.

4. A process according to any of claims 1 to 3, wherein the at least one alpha-crystal nucleating agent is a particulate nucleating agent selected from the group consisting of non-substituted or substituted benzoate salts, aromatic organophosphates, non-bridged or bridged salts of o-hexahydrophtalic acid, poly(vinyl cyclohexane), poly(4-methyl pentene-1) and poly(tetrafluoro ethylene).

5. A process according to claim 4, wherein the at least one alpha-crystal nucleating agent is selected from the group consisting of sodium 2,2'-methylene-bis-(4,6-di-tert-butylphenyl) phosphate (Adekastab NA-11), a mixture consisting of 60 wt% Hydroxybis (2,4,8,10-tetra-tert. butyl-6-hydroxy-12H-dibenzo(d,g)(1,3,2) dioxaphosphocin 6-oxidato) aluminium and 40 wt% Li-myristate (Adekastab NA-21), the disodium salt of Cis-endo-bicyclo[2.2.1]heptane-2,3-dicarboxylic acid (Hyperform HPN-68) and poly(vinyl cyclohexane).

6. A process according to any of the claims 1 to 5, wherein the heating step (a) is performed in a conventional melt mixing device like a single screw extruder or a co-rotating twin-screw extruder in a temperature interval from 220 to 320°C.

7. A process according any of the claims 1 to 6, wherein said melt is shaped into an article with an injection moulding or extrusion blow moulding or injection stretch blow moulding process.

8. An article comprising a propylene random copolymer and an alpha-crystal nucleating agent being **characterized by** an average relative content $X_c$ of the orthorhombic gamma-crystal modification of more than 50% as determined by wide-angle X-ray diffraction (WAXS).

9. An article according to claim 8, wherein said article is a moulded article which is obtained by injection moulding or injection stretch blow moulding and which article has an average wall thickness of at most 2.0 mm and a haze at 2.0 mm thickness of not more than 45%.

10. An article according to claim 8, wherein said article is a moulded article which is obtained by injection moulding or injection stretch blow moulding and which article has an average wall thickness of at most 1.0 mm and a haze at 1.0 mm thickness of not more than 30%.

11. A moulded polypropylene article according to any of the claims 8 to 10 which is a cup, a can, a pail, a jar or a bottle.

12. A moulded polypropylene article according to any of the claims 8 to 11 which is obtained by a process according to any of the claims 1 to 7.

13. Use of a moulded polypropylene article according to any of the claims 8 to 12 for packaging solid or liquid substances.

**Patentansprüche**

1. Verfahren zur Herstellung von eine Polypropylenzusammensetzung enthaltenden Gegenständen, wobei das Verfahren die folgenden Schritte umfasst:

a) Erwärmen der Polypropylenzusammensetzung, enthaltend ein isotaktisches Propylen-Random-Copolymer und wenigstens ein Alpha-Kristall-Nukleierungsmittel, auf eine Temperatur von 200 bis 350 °C, um eine Schmelze zu bilden,

b) Scheren der Schmelze bei einer scheinbaren Schergeschwindigkeit von wenigstens 100 s$^{-1}$,

c) Formen der Schmelze in einen Gegenstand und

d) Kühlen der Schmelze/des Gegenstands bei einer Abkühlungsrate von 10 bis 10000 K·min$^{-1}$.

2. Verfahren nach Anspruch 1, bei dem das isotaktische Propylen-Random-Copolymer von 80,0 bis 99,0 Gew.-% an Propylen und von 1,0 bis 20,0 Gew.% an Ethylen und/oder α-Olefin(en) mit 4 bis 12 Kohlenstoffatomen enthält.

3. Verfahren nach Anspruch 1 oder 2, bei dem das Alpha-Kristall-Nukleierungsmittel mit dem Propylen-Random-Copolymer in einem Gewichtsverhältnis gemischt wird, das von 0,0001:99,9999 bis 1:99 rangiert.

4. Verfahren nach einem der Ansprüche 1 bis 3, bei dem das wenigstens eine Alpha-Kristall-Nukleierungsmittel ein partikuläres Nukleierungsmittel ist, das aus der Gruppe ausgewählt ist, die aus nicht-substituierten oder substituierten Benzoatsalzen aromatischen Organophosphonaten, nicht-verbrückten oder verbrückten Salzen von o-Hexahydrophthalsäure, Poly(vinylcyclohexan) Poly(4-methylpenten-1) und Poly(tetrafluorethylen) besteht.

5. Verfahren nach Anspruch 4, bei dem das wenigstens eine Alpha-Kristall-Nukleierungsmittel aus der Gruppe ausgewählt ist, die aus Natrium-2,2'-methylen-bis-(4,6-di-tert-butylphenyl)-phosphat (Adekastab NA-11), einer Mischung bestehend aus 60 Gew.-% Hydroxybis-(2,4,8,10-tetra.tert-butyl-6-hydroxy-12H-dibenzo(d,g)(1,3,2)dioxaphoshocin-6-oxidato)-aluminium und 40 Gew.-% Li-Myristat (Adekastab NA-21), dem Natriumsalz von cis-endo-Bicyclo[2.2.1]heptan-2,3-dicarbonsäure (Hyperform HPN-68) und Poly(vinylcyclohexan) besteht.

6. Verfahren nach einem der Ansprüche 1 bis 5, bei dem der Erwärmungsschritt (a) in einem herkömmlichen Schmelzemischgerät, wie etwa einem Einzelschneckenextruder oder einem Gleichdralldoppelschneckenextruder, in einem Temperaturintervall von 220 bis 320 °C ausgeführt wird.

7. Verfahren nach einem der Ansprüche 1 bis 6, bei dem die Schmelze mit einem Spritzguss-, einem Blasextrusions- oder einem Spritz-Streckblasprozess in einen Gegenstand geformt wird.

8. Gegenstand, enthaltend eine Polypropylenzusammensetzung und ein Alpha-Kristall-Nukleierungsmittel, der **gekennzeichnet ist durch** einen mittleren Gehalt $X_c$ der orthorhombischen Kristallmodifikation von mehr als 50 %, wie bestimmt **durch** Weitwinkel-Röntgendiffraktion (WAXS).

9. Gegenstand nach Anspruch 8, bei dem der Gegenstand ein geformter Gegenstand ist, der durch Spritzgießen oder Spritz-Streckblasen erhalten wird und welcher Gegenstand eine mittlere Wanddicke von höchstens 2,0 mm und eine Opazität bei 2,0 mm Dicke von nicht mehr als 45 % aufweist.

10. Gegenstand nach Anspruch 8, bei dem der Gegenstand ein geformter Gegenstand ist, der durch Spritzgießen oder Spritz-Streckblasen erhalten wird und welcher Gegenstand eine mittlere Wanddicke von höchstens 1,0 mm und eine Opazität bei 1,0 mm Dicke von nicht mehr als 30 % aufweist.

11. Geformter Polypropylengegenstand nach einem der Ansprüche 8 bis 10, der eine Tasse, ein Becher, ein Eimer, ein Krug oder eine Flasche ist.

12. Geformter Polypropylengegenstand nach einem der Ansprüche 8 bis 11, der durch ein Verfahren nach einem der Ansprüche 1 bis 7 erhalten wird.

13. Verwendung eines geformten Polypropylengegenstands nach einem der Ansprüche 8 bis 12 zur Verpackung von festen oder flüssigen Substanzen.

**Revendications**

1. Procédé de production d'articles comprenant une composition de polypropylène, ledit procédé comprenant les étapes consistant à

a) chauffer ladite composition de polypropylène comprenant un copolymère aléatoire de propylène isotactique et au moins un agent de nucléation de cristal alpha à une température de 200 à 350°C pour former une matière fondue,

b) cisailler ladite matière fondue à un taux de cisaillement apparent d'au moins 100 s$^{-1}$,

c) façonner ladite matière fondue en un article et

d) refroidir ladite matière fondue/ledit article à une vitesse de refroidissement de 10 à 10000 K.min$^{-1}$.

2. Procédé selon la revendication 1, dans lequel le copolymère aléatoire de propylène isotactique comprend de 80,0 à 99,0 % en poids de propylène et de 1,0 à 20,0 % en poids d'éthylène et/ou d'$\alpha$-oléfine(s) ayant 4 à 12 atomes de carbone.

3. Procédé selon les revendications 1 ou 2, dans lequel l'agent de nucléation de cristal alpha est mélangé avec le copolymère aléatoire de propylène dans un rapport pondéral allant de 0,0001:99,9999 à 1:99.

4. Procédé selon l'une quelconque des revendications 1 à 3, dans lequel l'agent de nucléation de cristal alpha, au moins au nombre de un, est un agent de nucléation particulaire sélectionné dans le groupe constitué par les sels de benzoate non substitués ou substitués, les organophosphates aromatiques, les sels non pontés ou pontés de l'acide o-hexahydrophtalique, le poly(cyclohexane de vinyle), le poly(4-méthyl-pentène-1) et le poly(tétrafluoroéthylène).

5. Procédé selon la revendication 4, dans lequel l'agent de nucléation de cristal alpha, au moins au nombre de un, est sélectionné dans le groupe constitué par le 2,2'-méthylène-bis-(4,6-di-tert-butylphényl)phosphate de sodium (Adekastab NA-11), un mélange constitué par 60 % en poids d'hydroxybis(2,4,8,10-tétra-tert.butyl-6-hydroxy-12H-dibenzo(d,g)(1,3,2)dioxaphosphocin-6-oxidato)aluminium et 40 % en poids de myristate de lithium (Adekastab NA-21), le sel disodique de l'acide cis-endo-bicyclo[2.2.1]heptane-2,3-dicarboxylique (Hyperform HPN-68) et le poly (cyclohexane de vinyle).

6. Procédé selon l'une quelconque des revendications 1 à 5, dans lequel l'étape de chauffage (a) est réalisée dans un dispositif de mélange de matières fondues conventionnel comme une extrudeuse à une seule vis ou une extrudeuse bivis corotative à un intervalle de températures de 220 à 230°C.

7. Procédé selon l'une quelconque des revendications 1 à 6, dans lequel ladite matière fondue est façonnée en un article avec un procédé de moulage par injection ou de moulage par extrusion-soufflage ou de moulage par injection-étirage-soufflage.

8. Article comprenant un copolymère aléatoire de propylène et un agent de nucléation de cristal alpha **caractérisé par** une teneur relative moyenne $X_c$ de la modification de cristal gamma orthorhombique supérieure à 50 % telle que déterminée par diffraction des rayons X aux grands angles (WAXS).

9. Article selon la revendication 8, dans lequel ledit article est un article moulé qui est obtenu par moulage par injection ou moulage par injection-étirage-soufflage et lequel article a une épaisseur de paroi moyenne d'au plus 2,0 mm et un trouble à une épaisseur de 2,0 mm qui n'est pas supérieur à 45 %.

10. Article selon la revendication 8, dans lequel ledit article est un article moulé qui est obtenu par moulage par injection ou moulage par injection-étirage-soufflage et lequel article a une épaisseur de paroi moyenne d'au plus 1,0 mm et un trouble à une épaisseur de 1,0 mm qui n'est pas supérieur à 30 %.

11. Article de polypropylène moulé selon l'une quelconque des revendications 8 à 10 qui est une tasse, une canette, un seau, un pot ou une bouteille.

12. Article de polypropylène moulé selon l'une quelconque des revendications 8 à 11 qui est obtenu par un procédé selon l'une quelconque des revendications 1 à 7.

13. Utilisation d'un article de polypropylène moulé selon l'une quelconque des revendications 8 à 12 pour le conditionnement de substances solides ou liquides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 63097648 A
- US 5234879 A
- WO 9219653 A
- WO 9219658 A
- WO 9933843 A
- EP 887379 A1
- EP 1032599 A1
- EP 1155048 A1
- EP 2042552 A1
- EP 2030996 A1

### Non-patent literature cited in the description

- **LIBSTER et al.** *Journal of Colloid and Interface Science,* 2006, vol. 299, 172-181
- **PICCAROLO et al.** *Polymer,* 2001, vol. 42, 1167-1176
- **A. J. BRANDOLINI ; D. D. HILLS.** NMR Spectra of Polymers and Polymer Additives. Marcel Dekker, Inc, 2000
- **S. BERGER ; S. BRAUN.** 200 and More NMR Experiments: A Practical Course. Wiley-VCH, 2004
- **CHALLA et al.** *Makromol. Chem.,* 1962, vol. 56, 169-178
- **TURNER-JONES et al.** *Makromol. Chem.,* 1964, vol. 75, 134-158
- **PAE.** *J. Polym. Sci.,* 1968, vol. 6, 657-663